# EUROPÄISCHE PATENTSCHRIFT

(11) **EP 3 600 673 B1**
(45) Veröffentlichungstag und Bekanntmachung des Hinweises auf die Patenterteilung: **11.08.2021**
(21) Anmeldenummer: 18713945.6
(22) Anmeldetag: 28.03.2018
(51) Int. Cl.: B01L 3/02, G01N 35/10

(54) **VERFAHREN UND DOSIERVORRICHTUNG ZUM KONTAKTDOSIEREN VON FLÜSSIGKEITEN**
METHOD AND A DOSING DEVICE FOR CONTACT DOSING OF LIQUIDS
PROCÉDÉ ET DISPOSITIF DE DOSAGE DESTINÉ AU DOSAGE PAR CONTACT DE LIQUIDES

(30) Priorität: 28.03.2017 EP 17163424
(43) Veröffentlichungstag der Anmeldung: 05.02.2020
(73) Patentinhaber: Eppendorf AG, 22339 Hamburg (DE)
(72) Erfinder: GÖCKE, Rusbeh, 22335 Hamburg (DE)
(74) Vertreter: Hauck Patentanwaltspartnerschaft mbB
(86) Internationale Anmeldenummer: PCT/EP2018/058018
(87) Internationale Veröffentlichungsnummer: WO 2018/178202

(56) Entgegenhaltungen:
- DE-A1-102013 006 227
- US-A- 5 143 849
- US-A- 5 443 791
- US-A1- 2006 012 130
- US-A1- 2007 109 139
- US-A1- 2015 238 966
- US-A1- 2016 334 403

## Beschreibung

Die Erfindung betrifft ein Verfahren zum Kontaktdosieren von Flüssigkeiten und eine Dosiervorrichtung zum Kontaktdosieren von Flüssigkeiten.

Das Kontaktdosieren von Flüssigkeiten wird insbesondere in medizinischen, biologischen, biochemischen und chemischen Laboratorien angewandt.

Beim Kontaktdosieren wird in eine Pipettenspitze, ein zylindrisches Röhrchen oder einen anderen länglichen Hohlkörper mit einer unteren und einer oberen Öffnung eine erste Flüssigkeit aufgenommen, der längliche Hohlkörper in eine zweite Flüssigkeit in einem Zielgefäß eingetaucht und die erste Flüssigkeit aus dem länglichen Hohlkörper in die zweite Flüssigkeit im Zielgefäß abgegeben. Vorzugsweise wird die erste Flüssigkeit mittels des länglichen Hohlkörpers einem Quellgefäß entnommen. Hierfür kann der längliche Hohlkörper mit der unteren Öffnung in die erste Flüssigkeit eingetaucht und erste Flüssigkeit in den länglichen Hohlkörper eingesogen werden. Alternativ wird die erste Flüssigkeit durch die obere Öffnung in den länglichen Hohlkörper eingespeist.

Beim Dispensieren (engl.: *multidispense*) wird erste Flüssigkeit in mehreren Teilen aus dem länglichen Hohlkörper in mehrere Zielgefäße abgegeben. Hierfür kann eine Menge erster Flüssigkeit in den länglichen Hohlkörper aufgenommen werden, die für die Abgabe in mehreren Teilen in mehrere Zielgefäße ausreicht. Beim Diluieren befinden sich zwischen Teilen der ersten Flüssigkeit Luftpolster, sodass nach der Abgabe jedes Teils der ersten Flüssigkeit ein Rest mittels eines Luftpolsters ausgeblasen werden kann. Hierfür können abwechselnd Teile der ersten Flüssigkeit und Luftpolster in den länglichen Hohlkörper eingesogen werden. Beim Pipettieren wird die erste Flüssigkeit in ein einziges Zielgefäß abgegeben. Hierbei kann die gesamte, von dem länglichen Hohlkörper aufgenommene Flüssigkeit in ein einziges Zielgefäß abgegeben werden. In der Regel sind die erste Flüssigkeit und die zweite Flüssigkeit verschiedene Flüssigkeiten.

Bei Pipettenspitzen handelt es sich um Röhrchen, die an einer oberen Öffnung an einer Dosiervorrichtung gehalten werden und meistens eine konische Form aufweisen. Durch eine untere Öffnung des Röhrchens hindurch wird Flüssigkeit aufgenommen und abgegeben. Pipettenspitzen aus Kunststoff sind nach Gebrauch austauschbar, um Verschleppungen zu vermeiden, beispielsweise bei einem Wechsel der ersten oder zweiten Flüssigkeit. Pipettenspitzen aus Kunststoff werden an ihrer oberen Öffnung auf einen Ansatz der Dosiervorrichtung aufgeklemmt oder mit ihrem oberen Ende in eine Sackbohrung der Dosiervorrichtung eingeklemmt. Ferner sind Pipettenspitzen aus Glas oder Metall bekannt, die für Wiederverwendung bestimmt sind. Zylindrische Röhrchen aus Metall sind für dauerhafte Verwendung bestimmt und müssen zur Vermeidung von Verschleppungen gereinigt werden.

Zum Einsaugen von Flüssigkeit in den länglichen Hohlkörper hinein und Ausstoßen aus diesem heraus werden Luftpolstersysteme oder Direktverdrängersysteme verwendet. Bei Luftpolstersystemen wird mittels eines in einem Zylinder verlagerbaren Kolbens oder einer anderen Verdrängungseinrichtung ein Luftpolster in den länglichen Hohlkörper verlagert. Bei Direktverdrängersystemen wird in dem länglichen Hohlkörper ein Kolben verlagert, der direkt in Kontakt mit der Flüssigkeit in dem länglichen Hohlkörper kommt. Bekannt sind insbesondere Pipettenspitzen mit einem Röhrchen aus Kunststoff oder Glas und einem Kolben aus Metall oder Kunststoff.

Beim Einsaugen der ersten Flüssigkeit werden zusätzlich zu dem mindestens einen Dosiervolumen ein Umkehrhubvolumen und ein Resthubvolumen aufgenommen. Nach Aufnahme der ersten Flüssigkeit führt der Kolben einen Umkehrhub durch, wobei das Umkehrhubvolumen im Freistrahl aus dem länglichen Hohlkörper in das Quellgefäß zurückgegeben wird. Hierdurch kann ein Spiel in der Antriebsmechanik der Dosiervorrichtung überwunden werden, sodass dieses bei der nachfolgenden Abgabe des Dosiervolumens keine Rolle spielt. Das Resthubvolumen wird nach der Abgabe sämtliche Dosiervolumen aus dem länglichen Hohlkörper im Freistrahl in das Quellgefäß abgegeben. Das Resthubvolumen stellt sicher, dass eine hinreichende Menge Flüssigkeit für die Abgabe des mindestens einen definierten Dosiervolumens in dem länglichen Hohlkörper vorhanden ist.

Alternativ kann die erste Flüssigkeit mittels einer Mikropumpe oder einer anderen Pumpe oder mittels einer Kolben-Zylinder-Einheit umfassend einen Zylinder und in einen darin verlagerbaren Kolben durch die obere Öffnung des länglichen Hohlkörpers hindurch in diesen hineingefördert werden.

Die Kontaktdosierung ermöglicht eine präzise Abgabe kleiner Flüssigkeitsmengen. Nachteilig ist, dass beim Dispensieren Flüssigkeit zwischen den Zielgefäßen verschleppt werden kann. Diesen Nachteil weist die Dosierung im Freistrahl nicht auf, bei der die Flüssigkeit aus der unteren Öffnung des länglichen Hohlkörpers in einem Freistrahl in das Zielgefäß hinein abgegeben wird, ohne dass der längliche Hohlkörper in die zweite Flüssigkeit eintaucht. Die Dosierung im Freistrahl ist jedoch insbesondere bei kleineren Dosiervolumen weniger präzise.

Beim Kontaktdispensieren fällt die Präzision bei Dosiervolumen unterhalb 1 µl stark ab und beim Kontaktpipettieren fällt die Präzision bei Dosiervolumen unterhalb 0,2 µl stark ab.

Die US 2012/180579 A1 und die US 4,917,274 A beschreiben spezielle geometrische Ausgestaltungen von Pipettenspitzen zum Zwecke der Abgabe von geringen Dosiervolumen.

Die US 2015/0238966 A1 beschreibt ein System und Verfahren zum Dispensieren einer Probe in eine Pufferflüssigkeit, das der Probenanalyse durch Elektrosprühen in einem Massenspektrometer dient. In einer Druckkammer wird unter Überdruck der Pufferflüssigkeit beim Übertritt von einer Zuflusskapillare in eine Abflusskapillare mittels eines Dispensers eine Probe zugeführt. Hierfür wird der Dispenser mit einem Dispenserende in der Druckkammer angeordnet, sodass die zu dispensierende Probe vom Dispenserende in die Pufferflüssigkeit beim Eintritt in die Auslasskapillare eintreten kann. Hierbei bildet die Probe eine Flüssigkeitsbrücke zur Pufferflüssigkeit, die in das Einlassende der Auslasskapillare eintritt. Das Dispenserende ist in einem Abstand von dem Spalt zwischen Einlasskapillare und Auslasskapillare angeordnet und ein Tropfen aus der Probenflüssigkeit wächst an, bis er die Flüssigkeitsbrücke zur Pufferflüssigkeit bildet. Probe und Dispenser werden nicht in die Pufferflüssigkeit eingetaucht. Nach ihrer Ausbildung reißt die Flüssigkeitsbrücke ab und am Dispenser verbleibt ein kleiner Resttropfen.

Die US 5,143,849 A beschreibt die automatische Einstellung einer Pipettenspitze auf einen Abstand von einer Flüssigkeitsoberfläche, die das Bilden von Ansammlungen oder das Abreißen des Stroms der dispensierten Flüssigkeit verhindert. Hierzu wird ein Meniskus am unteren Ende der Pipettenspitze gebildet, die Pipettenspitze mit dem Meniskus auf die Oberfläche zubewegt, der Druck in der Pipettenspitze gemessen und anhand eines Druckabfalls festgestellt, dass der Meniskus die Oberfläche berührt. Sobald der Meniskus die Oberfläche berührt, wird die Annäherung der Pipettenspitze an die Oberfläche gestoppt und mit der Flüssigkeitsabgabe begonnen.

In der US 5,443,791A ist die Abgabe eines einzelnen Tropfens am unteren Ende einer Pipettenspitze durch Ansetzen des Tropfens an einer Flüssigkeitsoberfläche und anschließendes Anheben der Pipettenspitze beschrieben (sog. "Kiss-off"-Technik).

Davon ausgehend liegt der Erfindung die Aufgabe zugrunde, ein Verfahren und eine Vorrichtung zum Kontaktdosieren von Flüssigkeiten zu schaffen, das bzw. die eine deutliche Reduzierung des sicher beherrschbaren Dosiervolumens und eine deutliche Erhöhung der Präzision bei herkömmlicherweise sicher beherrschbarem Dosiervolumen ermöglicht.

Erfindungsgemäß wird die Aufgabe gelöst durch ein Verfahren zum Kontaktdosieren von Flüssigkeiten gemäß Anspruch 1. Vorteilhafte Ausgestaltungen des Verfahrens sind in Unteransprüchen angegeben.

Das erfindungsgemäße Verfahren zum Kontaktdosieren von Flüssigkeiten, umfasst die folgenden Schritte:
- in mindestens einen länglichen Hohlkörper wird eine erste Flüssigkeit eingefüllt,
- ein Teil der in dem länglichen Hohlkörper enthaltenen ersten Flüssigkeit wird als Kontaktierungsvolumen aus dem unteren Ende der Pipettenspitze herausgedrückt, sodass das Kontaktierungsvolumen einen am unteren Ende der Pipettenspitze anhängenden Tropfen bildet,
- der Tropfen und das untere Ende des länglichen Hohlkörpers wird in eine zweite Flüssigkeit in einem Zielgefäß eingetaucht und
- das definierte Dosiervolumen bestehend aus dem Kontaktierungsvolumen und einem in dem länglichen Hohlkörper enthaltenen Restvolumen wird in die zweite Flüssigkeit abgegeben.

Bei dem erfindungsgemäßen Verfahren wird das mittels des länglichen Hohlkörpers abzugebende definierte Dosiervolumen (Sollvolumen) aufgeteilt in ein Kontaktierungsvolumen und in ein Restvolumen. Das Kontaktierungsvolumen wird vor dem Eintauchen in die zweite Flüssigkeit aus dem länglichen Hohlkörper herausgedrückt, sodass es einen am unteren Ende des länglichen Hohlkörpers anhängenden Tropfen bildet. Danach wird zumindest ein Teil des Tropfens in die zweite Flüssigkeit im Zielgefäß eingetaucht und das gesamte Dosiervolumen bestehend aus Kontaktierungsvolumen und Restvolumen in die zweite Flüssigkeit abgegeben. Überraschenderweise hat sich gezeigt, dass auf diese Weise kleinere Dosiervolumen als beim herkömmlichen Kontaktdosieren sicher beherrschbar sind. Hierbei handelt es sich beim Kontaktdispensieren um Dosiervolumen unter der bislang beherrschten Untergrenze von 1,0 µl und beim Kontaktpipettieren um Dosiervolumen unter der bislang beherrschbaren Untergrenze von 0,2 µl. Zudem kann die Präzision bei Abgabe von Dosiervolumen von 1 µl und darüber beim Kontaktdispensieren bzw. 0,2 µl und darüber beim Kontaktpipettieren erhöht werden.
- Bei einer Dosiervorrichtung mit einer von einem Elektromotor angetriebenen Verdrängungseinrichtung und einer programmgesteuerten elektrischen Steuerungseinrichtung (z.B. einem Mikrorechner) zum Steuern des elektrischen Antriebsmotors ist das Verfahren einfach durch Programmieren der Steuerungseinrichtung implementierbar. Hierfür geeignete Dosiervorrichtungen sind bekannt. Die Erfindung eignet sich sowohl für die einfache Nachrüstung bekannter als auch für die Ausbildung neuer Dosiervorrichtungen.

Interne Analysen der Anmelderin im Rahmen der Erfindung haben ergeben, dass es beim herkömmlichen Dispensieren im Kontakt ohne Kontaktierungsvolumen bei aufeinanderfolgenden Abgaben in Ausnahmefällen abwechselnd zu einer das Dosiervolumen unterschreitenden Minderabgabe und einer das Dosiervolumen überschreitenden Mehrabgabe kommt. Die Anmelderin hat erkannt, dass bei der abwechselnden Minderabgabe und Mehrabgabe das fehlende Volumen einer Minderabgabe als Tropfen an der Unterseite des länglichen Hohlkörpers verbleibt und bei der nachfolgenden Mehrabgabe als zusätzliches Volumen mit abgegeben wird. Die erfolgreiche Abgabe des Dosiervolumens wurde von der Anmelderin auf den anhängenden Tropfen zurückgeführt. Gemäß einer weiterführenden Überlegung der Anmelderin wird das Dosiervolumen von vornherein auf einen anhängenden Tropfen mit dem Kontaktierungsvolumen und auf ein in den länglichen Hohlkörper angeordnetes Restvolumen aufgeteilt. Die Richtigkeit der Vermutung, dass hierdurch kleine Dosiervolumen beherrschbar und die Präzision herkömmlicher Dosiervolumen verbessert wird, wurde experimentell bestätigt. Die Ursachen für den beschriebenen Effekt sind noch nicht abschließend geklärt. Nach dem derzeitigen Stand der Überlegungen wird die herkömmliche Kontaktdosierung von Flüssigkeit durch die Auftriebskraft einer beim Eintauchen in die zweite Flüssigkeit an der unteren Öffnung des länglichen Hohlkörpers verbleibenden Blase und durch Grenzflächeneffekte zwischen länglichem Hohlkörper, erster und zweiter Flüssigkeit beeinträchtigt. Die erfindungsgemäße Kontaktdosierung vermeidet die störenden Einflüsse.

In der vorliegenden Anmeldung bezeichnet "Präzision" die Präzision gemäß ISO 35 34-1 und 5725-1.

Gemäß einer Ausführungsart der Erfindung sind die erste Flüssigkeit und die zweite Flüssigkeit verschiedene Flüssigkeiten. Gemäß einer anderen Ausführungsart sind die erste Flüssigkeit und die zweite Flüssigkeit dieselben Flüssigkeiten.

Mit dem Begriff Flüssigkeit sind in dieser Anmeldung flüssige Stoffe und flüssige Stoffgemische bezeichnet. Gemäß einer bevorzugten Ausführungsart sind die Stoffgemische Lösungen. Gemäß einer weiteren Ausführungsart sind die Stoffgemische mehrphasige Stoffgemische, wobei eine oder mehrere Phasen flüssig sind. Gemäß einer weiteren Ausführungsart sind die mehrphasigen Stoffgemische Emulsionen oder Suspensionen.

Der längliche Hohlkörper weist eine untere und eine obere Öffnung auf, wobei durch die untere Öffnung hindurch Flüssigkeit oder Gas eingesogen oder ausgestoßen wird. Die Bezeichnungen "untere Öffnung" und "obere Öffnung" beruhen darauf, dass der längliche Hohlkörper bei der Aufnahme und/oder bei der Abgabe von Flüssigkeit so ausgerichtet wird, dass sich die "untere Öffnung" unten und die "obere Öffnung" oben befindet, d.h. höher als die "untere Öffnung" angeordnet ist.

Bei Luftpolstersystemen wird die obere Öffnung mit einer Verdrängungseinrichtung verbunden und bei Direktverdrängersystemen wird ein im Hohlkörper angeordneter Kolben mittels einer zur oberen Öffnung hin oder durch diese hindurch erstreckten Kolbenstange im Hohlkörper verlagert. Diese Ausführungsart kann insbesondere für das Pipettieren, Dispensieren oder Diluieren verwendet werden.

Gemäß einer Ausführungsart der Erfindung wird die erste Flüssigkeit in den länglichen Hohlkörper eingefüllt, indem der mindestens eine längliche Hohlkörper mit seinem unteren Ende in eine erste Flüssigkeit in einem Quellgefäß eingetaucht und in den länglichen Hohlkörper erste Flüssigkeit eingesogen wird, wobei das Volumen der eingesogenen ersten Flüssigkeit mindestens ein definiertes Dosiervolumen umfasst, und wird der längliche Hohlkörper mit der darin enthaltenen ersten Flüssigkeit aus dem Quellgefäß entnommen.

Bei dieser Ausführungsart umfasst das Verfahren zum Kontaktdosieren von Flüssigkeiten die folgenden Schritte:
- mindestens ein länglicher Hohlkörper wird mit seinem unteren Ende in eine erste Flüssigkeit in einem Quellgefäß eingetaucht,
- in den länglichen Hohlkörper wird erste Flüssigkeit eingesogen, wobei das Volumen der eingesogenen ersten Flüssigkeit mindestens ein definiertes Dosiervolumen umfasst,
- der längliche Hohlkörper mit der darin enthaltenen ersten Flüssigkeit wird aus dem Quellgefäß entnommen,
- ein Teil der in den länglichen Hohlkörper enthaltenen ersten Flüssigkeit wird als Kontaktierungsvolumen aus dem unteren Ende der Pipettenspitze herausgedrückt, sodass das Kontaktierungsvolumen einen am unteren Ende der Pipettenspitze anhängenden Tropfen bildet,
- zumindest ein Teil des Tropfens wird in eine zweite Flüssigkeit in einem Zielgefäß eingetaucht und
- das definierte Dosiervolumen bestehend aus dem Kontaktierungsvolumen und einem in dem länglichen Hohlkörper enthaltenen Restvolumen wird in die zweite Flüssigkeit abgegeben.

Bei einer alternativen Ausführungsart ist die obere Öffnung des länglichen Hohlkörpers mit einer Kolben-Zylinder-Einheit umfassend einen Zylinder und einem darin verlagerbaren Kolben oder einer anderen Verdrängungseinrichtung oder mit einer Mikropumpe oder einer anderen Pumpe verbunden, um erste Flüssigkeit mittels der Verdrängungseinrichtung oder der Pumpe durch die obere Öffnung hindurch in den länglichen Hohlkörper hinein zu verlagern. Bei dieser Ausführungsart wird durch die obere Öffnung hindurch Flüssigkeit in den länglichen Hohlkörper eingefüllt. Die Kolben-Zylinder-Einheit kann zugleich das Reservoir oder das Quellgefäß für die erste Flüssigkeit bilden. Alternativ ist die Verdrängungseinrichtung oder Pumpe mit einem Reservoir oder Quellgefäß verbunden. Insbesondere bei Ausführung der Verdrängungseinrichtung als Kolben-Zylinder-Einheit kann diese über mindestens ein schaltbares Ventil wahlweise mit dem Reservoir oder Quellgefäß oder der oberen Öffnung des länglichen Hohlkörpers verbindbar sein. Diese Ausführungsarten können insbesondere für das Pipettieren und Dispensieren verwendet werden. Ferner ist es möglich, die Verdrängungseinrichtung oder Pumpe zusätzlich über mindestens ein schaltbares Ventil mit einem Lufteintritt zu verbinden, um für ein Diluieren abwechselnd Teile der ersten Flüssigkeit und Luftpolster durch den länglichen Hohlkörper hindurch auszugeben.

Gemäß einer weiteren Ausführungsart ist der längliche Hohlkörper eine Pipettenspitze. Gemäß einer bevorzugten Ausführungsart ist die Pipettenspitze eine Pipettenspitze aus Kunststoff, aus Glas oder aus Metall. Gemäß einer weiteren Ausführungsart hat die Pipettenspitze eine konische und/oder zylindrische Form. Gemäß einer weiteren Ausführungsart ist der längliche Hohlkörper ein (kreis-)zylindrisches Röhrchen z.B. aus Metall, eine Kapillare z.B. aus Glas oder ein Schlauch z.B. aus Silikon oder einem anderen biegsamen, vorzugsweise weichelastischen Material. Gemäß einer weiteren Ausführungsart hat das (kreis-) zylindrische Röhrchen am unteren Ende eine Spitze, z.B. um eine Gefäßabdeckung zu durchstoßen. Diese Ausführungsart wird auch als "hohle Nadel" bezeichnet. Zylindrische Röhrchen z.B. aus Metall sind beispielsweise durch Verschrauben an der Dosiervorrichtung befestigt und können hierfür am oberen Ende ein Außengewinde aufweisen. Gemäß einer weiteren Ausführungsart ist der längliche Hohlkörper eine Pipettenspitze aus Kunststoff, Glas oder Metall und der Kolben ein Kolben aus Kunststoff oder Metall.

Das Quellgefäß ist gemäß einer bevorzugten Ausführungsart ein Reservoir, Reagenzgefäß oder eine Mikrotiterplatte oder eine Küvette. Gemäß einer bevorzugten Ausführungsart weist das Zielgefäß einen Hohlraum auf, der unten und seitlich durch mindestens eine Wand eingefasst ist. Das Zielgefäß hat oben eine Gefäßöffnung, durch die hindurch der längliche Hohlkörper mit dem unteren Ende voran einführbar ist. Das Zielgefäß ist so ausgebildet, dass eingefüllte zweite Flüssigkeit nicht austreten kann, wenn die Gefäßöffnung oben angeordnet ist. Beim Kontaktdosieren ist das Zielgefäß mit der zweiten Flüssigkeit befüllt, wobei die zweite Flüssigkeit unten auf der Bodenwand ruht und seitlich von der Seitenwand eingefasst ist. Der längliche Hohlkörper wird mit dem am unteren Ende anhängenden Tropfen von oben durch die Gefäßöffnung hindurch in die zweite Flüssigkeit eingetaucht. Entweder taucht nur der Tropfen, teilweise oder vollständig, oder der Tropfen und das untere Ende des länglichen Hohlkörpers in die zweite Flüssigkeit ein. Gemäß einer bevorzugten Ausführungsart wird der Tropfen oder der Tropfen und das untere Ende des länglichen Hohlkörpers durch Verlagern des länglichen Hohlkörpers nach unten in die zweite Flüssigkeit eingetaucht. Das Zielgefäß ist gemäß einer bevorzugten Ausführungsart ein Reagenzgefäß oder eine Mikrotiterplatte oder eine Küvette.

Gemäß einer weiteren Ausführungsart wird in den länglichen Hohlkörper mehrfach erste Flüssigkeit eingefüllt und die erste Flüssigkeit wieder abgegeben, danach erneut erste Flüssigkeit eingefüllt und nach Abgabe von mehreren Vorabgabevolumen, die jeweils dem definierten Dosiervolumen entsprechen, in derselben Weise wie bei der Abgabe des definierten Dosiervolumens, mindestens einmal das definierte Dosiervolumen in die zweite Flüssigkeit abgegeben.

Bei dieser Ausführungsart wird durch das vorangehende mehrfache Befüllen und Entleeren der längliche Hohlkörper für das Dosieren eines definierten Dosiervolumens konditioniert. Gemäß einer weiteren Ausführungsart entspricht das zum Konditionieren in den länglichen Hohlkörper eingefüllte Volumen dem definierten Dosiervolumen oder der Summe der definierten Dosiervolumen, das oder die dosiert werden sollen, gegebenenfalls zuzüglich eines zusätzlichen Restabgabevolumens. Gemäß einer bevorzugten Ausführungsart wird hierfür die erste Flüssigkeit mehrfach aus einem Quellgefäß oder aus einem Reservoir in den länglichen Hohlkörper eingefüllt und in das Quellgefäß oder Reservoir zurückgegeben. Gemäß einer bevorzugten Ausführungsart wird dies vier- oder fünfmal oder öfter durchgeführt. Gemäß einer weiteren Ausführungsart wird hierfür der längliche Hohlkörper mit dem unteren Ende in die erste Flüssigkeit ins Quellgefäß eingetaucht, die erste Flüssigkeit in den länglichen Hohlkörper eingesogen und aus diesem wieder in das Quellgefäß ausgestoßen.

Durch die mehrfache Abgabe des Vorabgabevolumens werden Ungenauigkeiten vermieden, die beim Kontaktdispensieren bei den ersten Dispensierschritten beobachtet wurden. Das Volumen des Vorabgabevolumens entspricht dem definierten Dosiervolumen. Zudem wird das Vorabgabevolumen in der gleichen Weise abgegeben wie das definierte Dosiervolumen, indem zunächst ein Kontaktierungsvolumen in Form eines an dem unteren Ende des länglichen Hohlkörpers anhängenden Tropfens gebildet, zumindest ein Teil des Tropfens in die erste Flüssigkeit eingetaucht und das definierte Vorabgabevolumen bestehend aus Kontaktierungsvolumen und einem in dem länglichen Hohlkörper enthaltenen Restvolumen in die erste Flüssigkeit abgegeben wird. Gemäß einer weiteren Ausführungsart werden die Vorabgabevolumen in das Quellgefäß oder ein Reservoir abgegeben, das erste Flüssigkeit enthält. Gemäß einer weiteren Ausführungsart werden vier Vorabgabevolumen, fünf Vorabgabevolumen oder mehr als fünf Vorabgabevolumen abgegeben.

Gemäß einer weiteren Ausführungsart wird nach dem Konditionieren der längliche Hohlkörper mit dem unteren Ende in die erste Flüssigkeit eingetaucht und werden mehrere Vorabgabevolumen zuzüglich mindestens eines definierten Dosiervolumens und vorzugsweise eines Restabgabevolumens in den länglichen Hohlkörper eingesogen..

Nach Abgabe des Vorabgabevolumens wird mindestens einmal das definierte Dosiervolumen abgegeben, das wiederum aus einem unteren Ende des länglichen Hohlkörpers tropfenförmig anhängenden Kontaktierungsvolumen und einem im länglichen Hohlkörper enthaltenen Restvolumen besteht. Nur einfache Abgabe des definierten Dosiervolumens wird als Pipettieren bezeichnet. Die mehrfache Abgabe des definierten Dosiervolumens wird als Dispensieren bezeichnet.

Gemäß einer weiteren Ausführungsart wird ein Restabgabevolumen aus dem länglichen Hohlkörper verworfen, indem dieses in das Quellgefäß oder ein Reservoir abgegeben wird.

Gemäß einer weiteren Ausführungsart wird in den länglichen Hohlkörper erste Flüssigkeit eingesogen, welche mindestens ein definiertes Dosiervolumen, ein Umkehrhubvolumen und ein Restabgabevolumen umfasst. Das Umkehrhubvolumen dient dazu, einen Umkehrhub auszuführen, um einen Einfluss eines Spiels in der Antriebsmechanik der Verdrängungseinrichtung einer Dosiervorrichtung auf das abgegebene Dosiervolumen zu eliminieren. Durch das Restabgabevolumen wird gesichert, dass eine hinreichende Menge erster Flüssigkeit für die Abgabe des definierten Dosiervolumens in den länglichen Hohlkörper eingesogen wird.

Gemäß einer weiteren Ausführungsart wird in den länglichen Hohlkörper vor dem Einsaugen erster Flüssigkeit und wenn sein unteres Ende nicht in die erste Flüssigkeit eingetaucht ist ein Unterhubvolumen Luft eingesogen und wird nach der Abgabe des definierten Dosiervolumens und Entnehmen des unteren Endes des länglichen Hohlkörpers aus der zweiten Flüssigkeit das Unterhubvolumen Luft aus dem länglichen Hohlkörper ausgeblasen, um Reste erster Flüssigkeit aus dem länglichen Hohlkörper zu entfernen. Dies ist sowohl beim Pipettieren als auch beim Dispensieren und Diluieren vorteilhaft.

Gemäß einer weiteren Ausführungsart wird Flüssigkeit mittels nur eines einzigen länglichen Hohlkörpers dosiert. Gemäß einer anderen Ausführungsart wird Flüssigkeit gleichzeitig mittels mehrerer länglicher Hohlkörper dosiert, beispielsweise mittels 8, 12, 16, 24, 48 oder 96 länglicher Hohlkörper. Die gleichzeitige Dosierung mittels einer Vielzahl länglicher Hohlkörper kann mittels Mehrkanaldosiervorrichtungen erfolgen. Dosiervorrichtungen mit Dosierköpfen für eine Vielzahl Pipettenspitzen oder hohler Nadeln sind bekannt.

Gemäß einer weiteren Ausführungsart wird der längliche Hohlkörper nach der Aufnahme der ersten Flüssigkeit vom Quellgefäß weg zum Zielgefäß hin verlagert und der Tropfen am unteren Ende des länglichen Hohlkörpers gebildet, wenn sich der längliche Hohlkörper näher am Zielgefäß als am Quellgefäß befindet. Dadurch, dass der Tropfen erst dann gebildet wird, wenn sich der längliche Hohlkörper näher am Zielgefäß als am Quellgefäß befindet, wird einem Verdunsten erster Flüssigkeit und einem Verlust des Tropfens beim Transport mittels des länglichen Hohlkörpers entgegengewirkt. Vorzugsweise wird der Tropfen so spät wie möglich vor dem Eintauchen in die zweite Flüssigkeit am unteren Ende des länglichen Hohlkörpers ausgebildet.

Gemäß einer weiteren Ausführungsart wird nach dem Entnehmen des länglichen Hohlkörpers aus dem Quellgefäß die erste Flüssigkeit in den länglichen Hohlkörper zurückgezogen und danach der Tropfen am unteren Ende des länglichen Hohlkörpers ausgebildet. Durch das Zurückziehen der Flüssigkeit in den länglichen Hohlkörper werden die Verdunstung der ersten Flüssigkeit und das Risiko eines Verlustes erster Flüssigkeit beim Transport weiter reduziert.

Gemäß einer weiteren Ausführungsart wird nur ein einziges definiertes Dosiervolumen abgegeben. Gemäß dieser Ausführungsart wird das Verfahren für das Pipettieren verwendet. Das Verfahren kann beliebig oft wiederholt werden, um mehrere Pipettierungen durchzuführen.

Gemäß einer anderen Ausführungsart wird nach der Abgabe des definierten Dosiervolumens der längliche Hohlkörper aus dem Zielgefäß entnommen, ein Tropfen mit dem Kontaktierungsvolumen am unteren Ende des länglichen Hohlkörpers gebildet, zumindest ein Teil des Tropfens in eine zweite Flüssigkeit in einem anderen Zielgefäß eingetaucht und das definierte Dosiervolumen bestehend aus dem Kontaktierungsvolumen und einem in den länglichen Hohlkörper vorhandenen Restvolumen in die zweite Flüssigkeit im anderen Zielgefäß abgegeben. Gemäß dieser Ausführungsart wird das Verfahren für das Dispensieren verwendet. Gemäß einer bevorzugten Ausführungsart wird in der beschriebenen Weise mehrfach ein definiertes Dosiervolumen aus dem länglichen Hohlkörper in verschiedene Zielgefäße abgegeben.

Gemäß einer weiteren Ausführungsart werden in den länglichen Hohlkörper mehrere definierte Dosiervolumen und zwischen den definierten Dosiervolumen Luftpolster eingesogen. Die Abgabe der definierten Dosiervolumen erfolgt wie vorstehend beim Dispensieren, wobei nach der Abgabe jedes definierten Dosiervolumens ein Luftpolster ausgeblasen wird. Hierdurch wird das Verfahren für das Diluieren verwendet.

Gemäß einer weiteren Ausführungsart wird nach Abgabe des definierten Dosiervolumens der längliche Hohlkörper aus dem Zielgefäß entnommen, danach der längliche Hohlkörper zu einem anderen Zielgefäß hin verlagert und der Tropfen am unteren Ende des länglichen Hohlkörpers ausgebildet, wenn sich der längliche Hohlkörper näher am anderen Zielgefäß als am Zielgefäß befindet. Hierdurch werden die Verdunstung von erster Flüssigkeit und das Risiko des Verlustes des Tropfens beim Transport vom Zielgefäß zum anderen Zielgefäß vermindert. Zu diesem Zwecke wird gemäß einer weiteren Ausführungsart nach dem Herausziehen des länglichen Hohlkörpers aus dem Zielgefäß und vor dem Verlagern zu einem anderen Zielgefäß die erste Flüssigkeit in den länglichen Hohlkörper zurückgezogen.

ordnung des länglichen Hohlkörpers über dem Zielgefäß werden die Verdunstung und das Risiko des Tropfenverlustes weiter herabgesetzt.

Gemäß einer weiteren Ausführungsart ruht der längliche Hohlkörper während der Ausbildung des Tropfens oder wird der längliche Hohlkörper während der Ausbildung des Tropfens zur zweiten Flüssigkeit im Zielgefäß hin verlagert. Hierdurch kann die Ausbildung des Tropfens unmittelbar vor dem Eintauchen in die zweite Flüssigkeit erfolgen, wodurch die Verdunstung und das Risiko des Verlustes des Tropfens beim Transport weiter herabgesetzt werden.

Erfindungsgemäß wird der Tropfen und das untere Ende des länglichen Hohlkörpers in die zweite Flüssigkeit im Zielgefäß oder im anderen Zielgefäß eingetaucht und danach das definierte Dosiervolumen abgegeben. Hierdurch wird der Einfluss von Grenzflächeneffekten auf die Abgabe des Dosiervolumens weiter herabgesetzt. Dies ermöglicht besonders kleine Dosiervolumen und eine besonders hohe Präzision der Dosierung.

Gemäß einer weiteren Ausführungsart beträgt das Kontaktierungsvolumen im Bereich von 0,5 bis 0,001 µl, vorzugsweise 0,2 bis 0,05 µl, vorzugsweise 0,1 µl.

Gemäß einer weiteren Ausführungsart ist der Tropfen mit dem Kontaktierungsvolumen eine Kugel oder ein Kugelsegment, wobei das Kugelsegment kleiner als eine Halbkugel ist, so groß wie eine Halbkugel ist oder größer als eine Halbkugel ist. Bei der Erfindung kann der Tropfen aber auch eine andere Form als die ideale Form einer Kugel oder eines Kugelsegments oder einer Halbkugel aufweisen. Die Tropfenform hängt insbesondere von Materialeigenschaften des länglichen Hohlkörpers und von den verwendeten Flüssigkeiten ab.

Gemäß einer weiteren Ausführungsart beträgt das definierte Dosiervolumen 0,01 bis 100 µl, vorzugsweise 0,1 bis 1 µl, vorzugsweise 0,2 bis 0,5 µl. Die Erfindung ist fenform hängt insbesondere von Materialeigenschaften des länglichen Hohlkörpers und von den verwendeten Flüssigkeiten ab.

Gemäß einer weiteren Ausführungsart beträgt das definierte Dosiervolumen 0,01 bis 100 µl, vorzugsweise 0,1 bis 1 µl, vorzugsweise 0,2 bis 0,5 µl. Die Erfindung ist sowohl im Bereich herkömmlicherweise beherrschter Dosiervolumen als auch unterhalb des herkömmlichen Bereichs beherrschter Dosiervolumen verwendbar.

Gemäß einer weiteren Ausführungsart wird der längliche Hohlkörper 0,5 bis 5 mm tief, vorzugsweise 1 bis 4 mm tief, vorzugsweise 3 mm tief in die zweite Flüssigkeit im Zielgefäß eingetaucht.

Gemäß einer weiteren Ausführungsart wird die erste Flüssigkeit in dem länglichen Hohlkörper durch Verlagern eines Luftpolsters mittels eines Kolbens in einem Zylinder oder mittels einer anderen Verdrängungseinrichtung oder durch Verlagern eines direkt in Kontakt mit der ersten Flüssigkeit stehenden Kolbens in den länglichen Hohlkörper verlagert. Gemäß diesen Ausführungsarten ist das Verfahren mittels eines Luftpolstersystems oder mittels eines Direktverdrängersystems ausführbar. Mit einem Luftpolstersystem oder einem Direktverdrängersystem kann auch ein Unterhub für die Aufnahme und das Ausblasen eines Unterhubvolumens Luft ausgeführt werden.

Bei dem Verfahren werden der längliche Hohlkörper, das Quellgefäß und das Zielgefäß relativ zueinander verlagert um den länglichen Hohlkörper in das Quellgefäß einzutauchen, daraus zu entnehmen, zum Quellgefäß hin zu verlagern, zumindest den Tropfen einzutauchen und ggf. weitere Verlagerungen vorzunehmen.

Gemäß einer bevorzugten Ausführungsart wird der längliche Hohlkörper verlagert, wobei das Quellgefäß und das Zielgefäß ruhen. Gemäß einer anderen Ausführungsart werden das Quellgefäß und das Zielgefäß verlagert, wobei der längliche Hohl-Ferner wird die Aufgabe durch eine Dosiervorrichtung gemäß Anspruch 14 gelöst. Vorteilhafte Ausführungsarten der Dosiervorrichtung sind in Unteransprüchen angegeben.

Die erfindungsgemäße Dosiervorrichtung zum Kontaktieren von Flüssigkeit umfasst Mittel zum Ausführen des Verfahrens nach einem der Ansprüche 1 bis 14.

Die Mittel zum Ausführen des Verfahrens sind insbesondere eine erste Halteeinrichtung zum Halten mindestens eines länglichen Hohlkörpers (z.B. ein Ansatz zum Aufklemmen einer Pipettenspitze), eine Verdrängungseinrichtung für Flüssigkeit (z.B. ein Kolben in einem Zylinder), ein elektromotorischer Antrieb zum Antreiben der Verdrängungseinrichtung (z.B. des Kolbens in dem Zylinder), eine elektrische Steuerungseinrichtung (z.B. ein Mikrorechner) und eine elektrische Energieversorgung (elektrische Spannungsversorgung). Gemäß einer weiteren Ausführungsart ist die elektrische Steuerungseinrichtung so programmiert, dass sie den elektromotorischen Antrieb so steuert, dass die Verdrängungseinrichtung gemäß dem Verfahren erste Flüssigkeit in den länglichen Hohlkörper aufnehmen und aus diesem ausstoßen kann.

Gemäß einer weiteren Ausführungsart umfassen die Mittel zum Ausführen des Verfahrens einen XYZ-Roboter oder ein anderes positionierendes Gerät mit einer zweiten Halteeinrichtung zum Halten eines Dosierkopfes der Dosiervorrichtung und/oder eines Quellgefäßes und/oder eines Zielgefäßes, der mit der elektrischen Steuerungseinrichtung verbunden ist. Der Dosierkopf umfasst eine erste Halteeinrichtung und eine Verdrängungseinrichtung. Gemäß einer weiteren Ausführungsart ist die elektrische Steuerungseinrichtung so programmiert, dass sie den XYZ-Roboter oder ein anderes positionierendes Gerät so steuert, dass der Dosierkopf relativ zum Quellgefäß und zum Zielgefäß so verfahren wird, dass erste Flüssigkeit aus einem Quellgefäß aufgenommen und in ein Zielgefäß abgegeben werden kann. Gemäß einer bevorzugten Ausführungsart ist die elektrische Steuerungseinrichtung so programfäß und zum Zielgefäß so verfahren wird, dass erste Flüssigkeit aus einem Quellgefäß aufgenommen und in ein Zielgefäß abgegeben werden kann. Gemäß einer bevorzugten Ausführungsart ist die elektrische Steuerungseinrichtung so programmiert, dass der Dosierkopf oberhalb einer Arbeitsfläche so verfahren wird, dass erste Flüssigkeit aus einem auf der Arbeitsfläche positionierten Quellgefäß aufgenommen und in ein auf der Arbeitsfläche positioniertes Zielgefäß abgegeben werden kann.

Gemäß einer weiteren Ausführungsart ist die Dosiervorrichtung eine elektrisch oder manuell angetriebene Handdosiervorrichtung, ein Dosierautomat oder ein Laborautomat, wobei sie eine Einkanal- oder eine Mehrkanaldosiervorrichtung ist.

Die Erfindung wird nachfolgend anhand der anliegenden Zeichnungen eines Ausführungsbeispiels und von Untersuchungsergebnissen näher erläutert. In den Zeichnungen zeigen:
- Fig. 1: Pipettenspitze mit Kontaktierungsvolumen oberhalb einer Mikrotiterplatte in einer Seitenansicht;
- Fig. 2: vergrößertes Detail der Pipettenspitze gemäß Fig. 1;
- Fig. 3: weiter vergrößertes Detail der Pipettenspitze von Fig. 1 im Schnitt;
- Fig. 4: Pipettenspitze beim Eintauchen in ein Zielgefäß bei einer herkömmlichen Kontaktdosierung;
- Fig. 5: vergrößertes Detail der Pipettenspitze von Fig. 4;
- Fig. 6: Kolbenverlagerung und Verlagerung der Pipettenspitze über der Zeit bei der Aufnahme erster Flüssigkeit aus einem Quellgefäß beim Kontaktdispensieren mit Kontaktierungsvolumen in einem Diagramm;
- Fig. 7: Kolbenverlagerung und Verlagerung der Pipettenspitze über der Zeit bei der Abgabe erster Flüssigkeit in ein Zielgefäß beim Kontaktdispensieren mit Kontaktierungsvolumen in einem Diagramm;
- Fig. 8: Kolbenverlagerung und Verlagerung der Pipettenspitze über der Zeit bei der Abgabe eines Restabgabevolumens in ein Quellgefäß beim Kontaktdispensieren mit Kontaktierungsvolumen in einem Diagramm;
- Fig. 9: Kolbenverlagerung und Verlagerung der Pipettenspitze über der Zeit bei der Aufnahme von erster Flüssigkeit aus einem Quellgefäß beim Kontaktpipettieren mit Kontaktierungsvolumen in einem Diagramm;

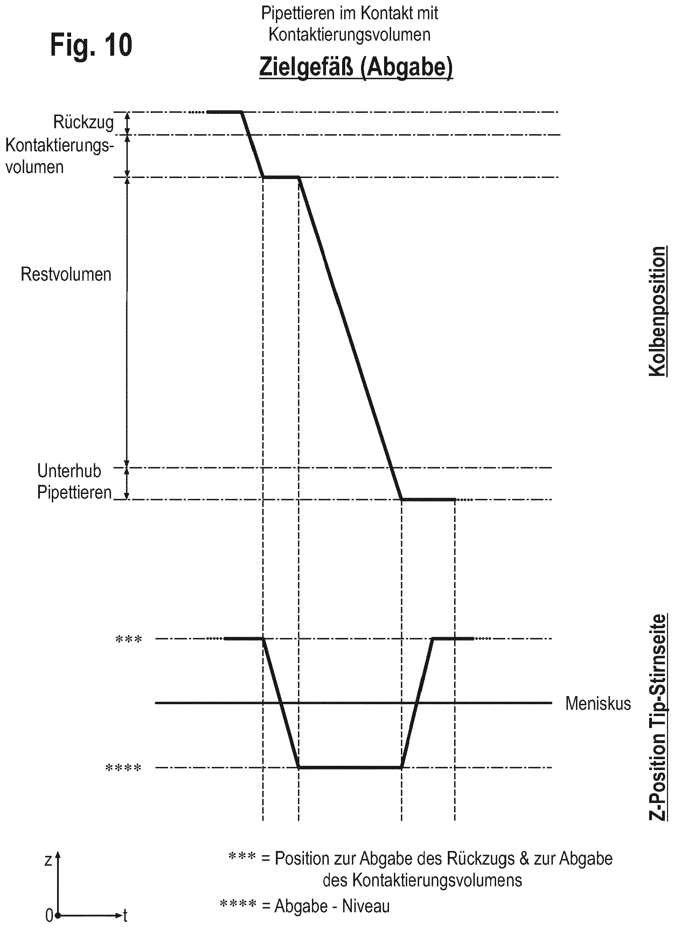

- Fig. 10: Kolbenverlagerung und Verlagerung der Pipettenspitze über der Zeit bei der Abgabe erster Flüssigkeit in ein Zielgefäß bei der Kontaktpipettierung mit Kontaktierungsvolumen in einem Diagramm;
- Fig. 11: abgegebenes Dosiervolumen in aufeinanderfolgenden Dosierschritten beim Kontaktdispensieren mit und ohne Kontaktierungsvolumen in einem Diagramm;
- Fig. 12: abgegebenes Dosiervolumen in aufeinanderfolgenden Dosierschritten beim Kontaktdispensieren mit und ohne Kontaktierungsvolumen in einem Diagramm;
- Fig. 13: abgegebenes Dosiervolumen in aufeinanderfolgenden Dosierschritten beim Kontaktdispensieren mit Kontaktierungsvolumen für zwei verschiedene Sollvolumen in einem Diagramm;
- Fig. 14: abgegebenes Dosiervolumen in aufeinanderfolgenden Dosierschritten beim Kontaktdispensieren mit und ohne Kontaktierungsvolumen in einem Diagramm.

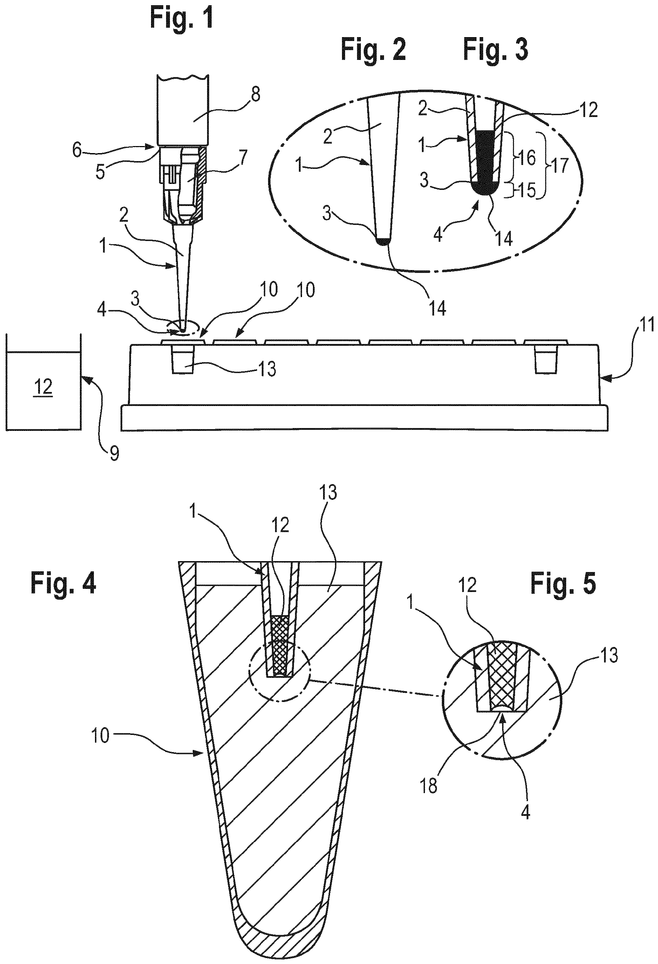

Gemäß Fig. 1 bis 3 verwendet das erfindungsgemäße Verfahren eine Pipettenspitze 1 aus Kunststoff. Hierbei handelt es sich um ein im Wesentlichen konisches und/oder zylindrisches Röhrchen 2, das am unteren Ende 3 eine untere Öffnung 4 und am oberen Ende 5 eine obere Öffnung 6 aufweist, deren Durchmesser vorzugsweise größer als der Durchmesser der kleinen Öffnung 4 ist. Die Pipettenspitze 1 ist auf einen konischen und/oder zylindrischen Ansatz 7 einer Dosiervorrichtung 8 aufgeklemmt. Die Pipettenspitze 1 ist teilweise geschnitten, um dies zu zeigen. Im Beispiel handelt es sich um eine Einkanaldosiervorrichtung.

Die Dosiervorrichtung 8 umfasst eine Verdrängungseinrichtung, die über einen Kanal innerhalb der Dosiervorrichtung mit einem Loch am unteren Ende des Ansatzes 7 verbunden ist.

Ferner verwendet das Verfahren ein Quellgefäß 9 und ein Zielgefäß 10. Das Quellgefäß 9 ist im Beispiel ein Reservoir. Das Zielgefäß 10 ist eine Vertiefung einer Mikrotiterplatte 11, deren andere Vertiefungen andere Zielgefäße bilden.

Das Quellgefäß 9 ist mit erster Flüssigkeit 12 befüllt und im Zielgefäß 10 befindet sich zweite Flüssigkeit 13.

Bei dem Verfahren wird die Pipettenspitze 1 in die erste Flüssigkeit 12 im Quellgefäß 9 eingetaucht und dann mittels der Verdrängungseinrichtung der Dosiervorrichtung erste Flüssigkeit in die Pipettenspitze 1 eingesogen.

In die Pipettenspitze 1 wird eine Menge erster Flüssigkeit eingesogen, die mindestens ein definiertes Dosiervolumen, ein Umkehrhubvolumen und ein Restabgabevolumen umfasst.

Danach wird die Pipettenspitze 1 mittels der Dosiervorrichtung 8 vertikal nach oben aus dem Quellgefäß 9 herausgezogen und horizontal verfahren, bis sie vertikal über einem Zielgefäß 10 angeordnet ist. Danach wird die Pipettenspitze 1 mittels der Dosiervorrichtung 8 abgesenkt, bis ihre untere Öffnung 4 kurz über der zweiten Flüssigkeit 13 im Zielgefäß 10 angeordnet ist.

In dieser Position wird die Pipettenspitze 1 kurz angehalten und mittels der Verdrängungseinrichtung ein Teil der ersten Flüssigkeit aus der unteren Öffnung 4 der Pipettenspitze 1 herausgedrückt, sodass dieser Teil einen am unteren Ende der Pipettenspitze 1 anhängenden Tropfen 14 bildet. Dies ist in Fig. 2 und 3 gezeigt. Das Volumen des Tropfens 14 ist das Kontaktierungsvolumen 15. Ferner ist in der Pipettenspitze 1 zumindest noch ein Restvolumen 16 vorhanden, das zusammen mit dem Kontaktierungsvolumen 15 das definierte Dosiervolumen 17 bildet.

Danach wird das untere Ende 3 der Pipettenspitze 1 mit dem anhängenden Tropfen 14 in die zweite Flüssigkeit 13 eingetaucht. Die Eintauchtiefe des unteren Endes 3 der Pipettenspitze 1 beträgt beispielsweise 3 mm.

In dieser Stellung wird mittels der Verdrängungseinrichtung das Restvolumen 16 aus der Pipettenspitze 1 herausgedrückt, sodass dieses gemeinsam mit dem Kontaktierungsvolumen 15 in die zweite Flüssigkeit 13 abgegeben wird.

Danach wird die Pipettenspitze 1 mittels der Dosiervorrichtung 8 vertikal nach oben aus dem Zielgefäß 10 herausgezogen und ggf. für die Abgabe weiterer definierter Dosiervolumen 17 zu einem anderen Zielgefäß 10 der Mikrotiterplatte 11 verfahren.

Hierdurch wird eine präzise Abgabe kleiner Dosiervolumen unter 1 µl und eine präzisere Abgabe von Dosiervolumen von 1 µl und darüber ermöglicht.

Bei der herkömmlichen Kontaktdosierung ohne Kontaktierungsvolumen verbleibt anscheinend beim Eintauchen der befüllten Pipettenspitze in die zweite Flüssigkeit im Zielgefäß eine kleine Blase 18 am unteren Ende 3 der Pipettenspitze 1 und setzt sich vor die untere Öffnung 4. Dies ist in Fig. 4 und 5 gezeigt. Grenzflächeneffekte zwischen der ersten Flüssigkeit 12 in der Pipettenspitze 1, der Luft in der Blase 18 und der zweiten Flüssigkeit 13 im Zielgefäß 10 wirken einer präzisen Abgabe des definierten Dosiervolumens entgegen.

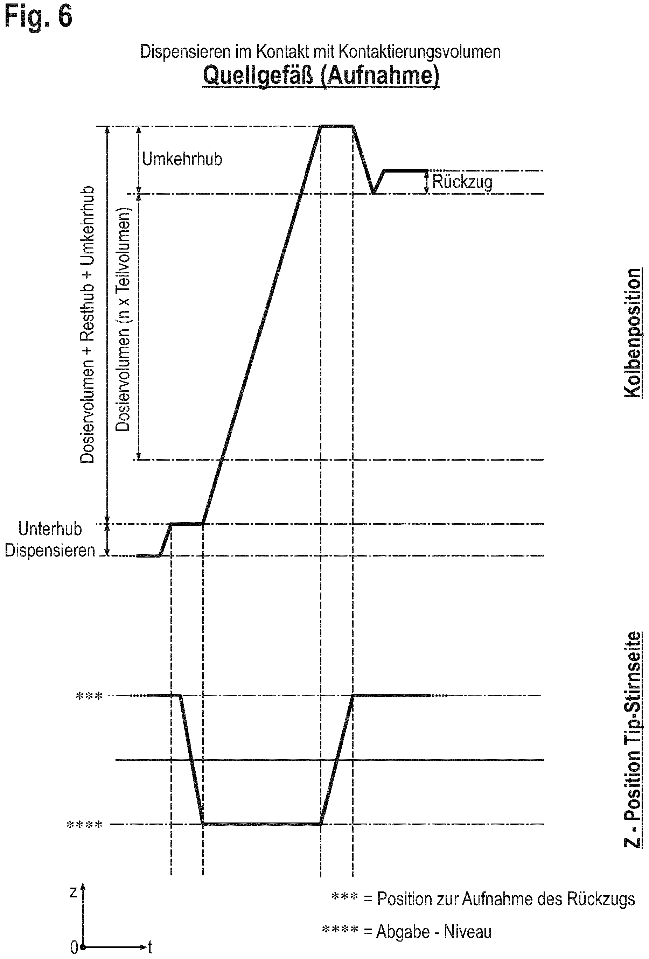

Gemäß Fig. 6 wird beim Kontaktdispensieren mit Kontaktierungsvolumen zunächst ein Unterhubvolumen aus Luft eingesogen, wenn die Pipettenspitze noch nicht in die erste Flüssigkeit eingetaucht ist. Nach dem Eintauchen der Pipettenspitze wird der Kolben der Verdrängungseinrichtung verlagert, sodass die Pipettenspitze ein gesamtes Dosiervolumen umfassend eine Anzahl von n definierten Dosiervolumen, ein Resthubvolumen und ein Umkehrhubvolumen aufnimmt. Da die Pipettenspitze in die erste Flüssigkeit im Quellgefäß eintaucht, ist sie unterhalb des Meniskus an der Oberseite der ersten Flüssigkeit angeordnet.

Danach ruht der Kolben und die Pipettenspitze wird aus der ersten Flüssigkeit herausgezogen.

Wenn sich die Pipettenspitze oberhalb des Meniskus befindet, wird der Kolben nach unten verlagert, wodurch ein Umkehrhub ausgeführt wird. Hierbei wird ein Umkehrhubvolumen in Freistrahl in das Quellgefäß abgegeben.

Optional kann der Kolben um einen den Umkehrhub unterschreitenden Rückzug zurückgezogen werden, um die erste Flüssigkeit in die Pipettenspitze hineinzuziehen.

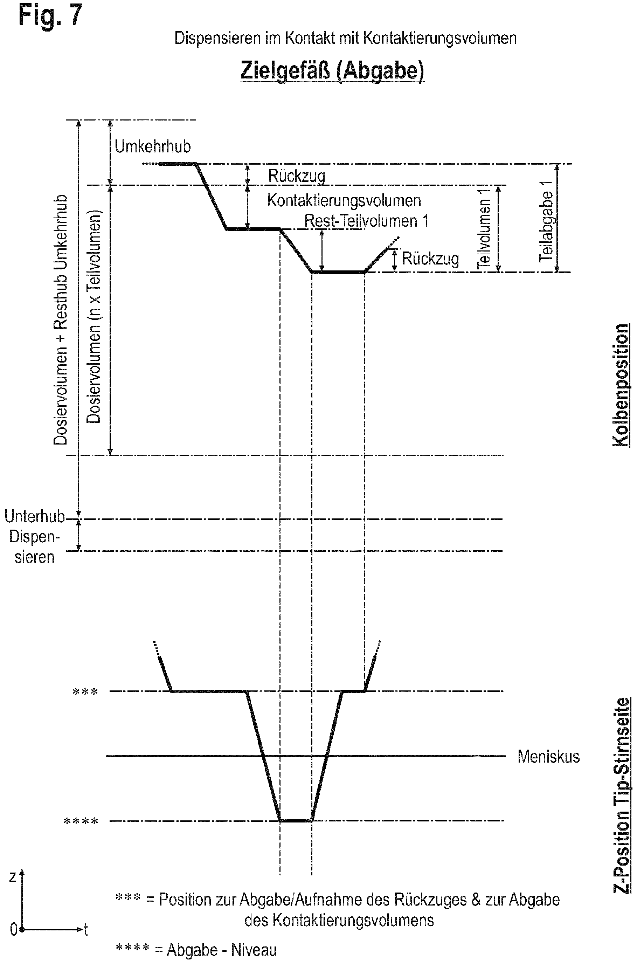

Die solchermaßen befüllte Pipettenspitze wird zum Zielgefäß verlagert. Gemäß Fig. 7 wird die Pipettenspitze ein Stück oberhalb des Meniskus der zweiten Flüssigkeit im Zielgefäß angehalten und danach der Kolben der Verdrängungseinrichtung so verlagert, dass ein ggf. erfolgter Rückzug rückgängig gemacht wird und erste Flüssigkeit unten aus der Pipettenspitze herausgedrückt wird. Die Menge der herausgedrückten Flüssigkeit entspricht einem definierten Kontaktierungsvolumen. Das Kontaktierungsvolumen hängt am unteren Ende der Pipettenspitze an.

Danach wird das untere Ende der Pipettenspitze in die zweite Flüssigkeit im Zielgefäß eingetaucht, beispielsweise bis sich das untere Ende 3 mm unterhalb des Meniskus an der Oberfläche der zweiten Flüssigkeit befindet. Anschließend wird durch Verlagern des Kolbens ein Restvolumen der ersten Flüssigkeit aus der Pipettenspitze herausgedrückt. Infolgedessen wird ein definiertes Dosiervolumen, welches aus dem Kontaktierungsvolumen und dem Restvolumen besteht, in die zweite Flüssigkeit abgegeben.

Anschließend wird die Pipettenspitze aus der zweiten Flüssigkeit herausgezogen, bis sie sich oberhalb des Meniskus der zweiten Flüssigkeit befindet. Danach wird der Kolben ein kleines Stück zurückgezogen, um die erste Flüssigkeit in die Pipettenspitze hineinzuziehen.

Anschließend wird die Pipettenspitze zu einem anderen Zielgefäß verlagert und der in Fig. 7 gezeigte Vorgang an dem anderen Zielgefäß wiederholt.

Somit wird aus der Pipettenspitze in jedes Zielgefäß ein Teilvolumen abgegeben, das ein definiertes Dosiervolumen aufweist.

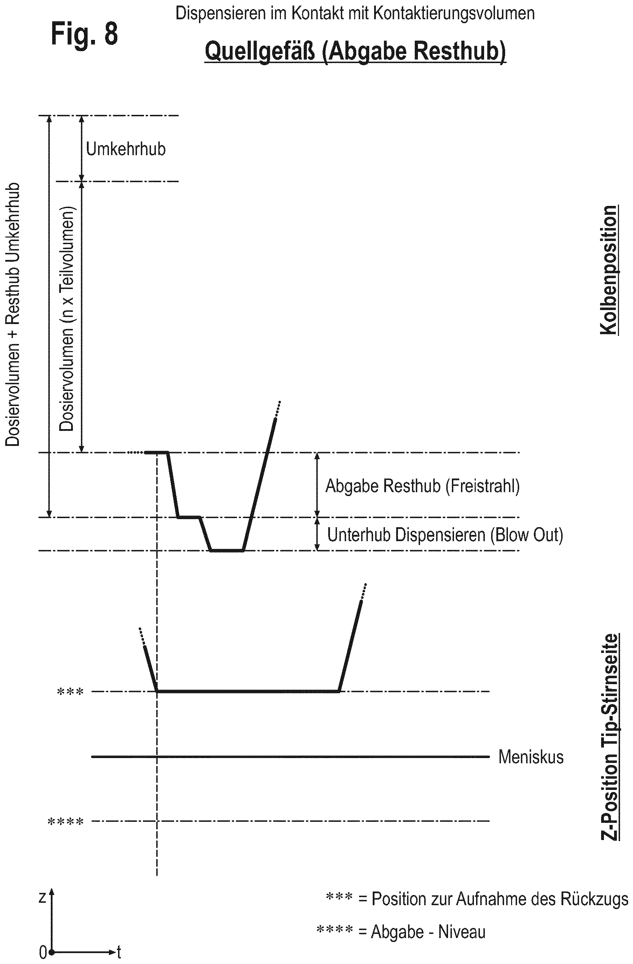

Nach Abgabe sämtlicher Teilvolumen aus der Pipettenspitze wird diese gemäß Fig. 8 zum Quellgefäß hin verlagert, sodass sich ihr unteres Ende oberhalb des Meniskus der ersten Flüssigkeit befindet. Der Kolben führt einen Resthub aus, wodurch die noch in der Pipettenspitze vorhandene Flüssigkeit im Freistrahl aus der Pipettenspitze in das Zielgefäß ausgeblasen wird. Optional kann zusätzlich durch Verlagern des Kolbens ein Unterhubvolumen (*blow out*) ausgeblasen werden, um Restflüssigkeit aus der Pipettenspitze zu entfernen.

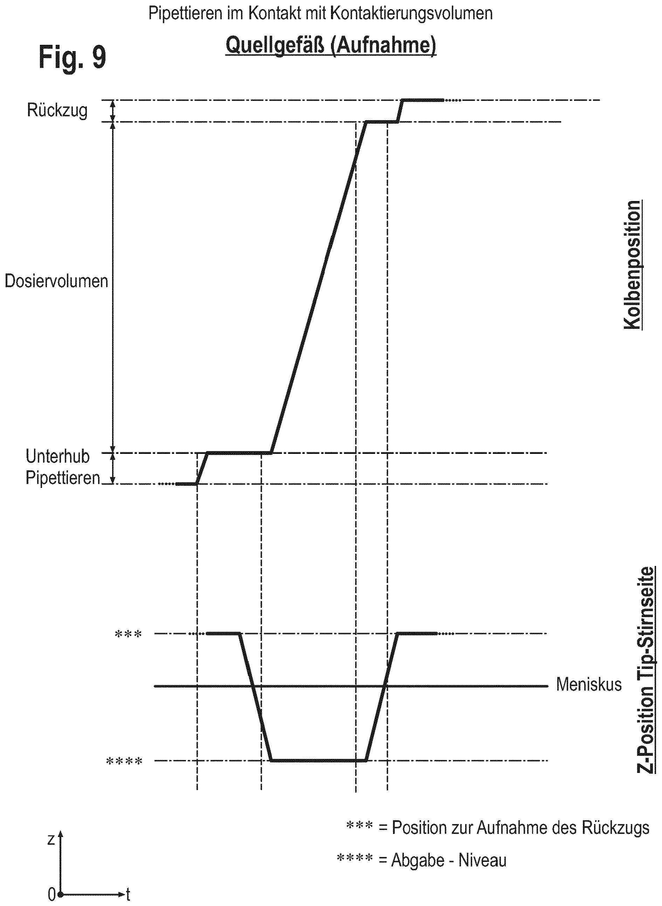

Gemäß Fig. 9 wird beim Kontaktpipettieren zunächst die Pipettenspitze in einem Abstand oberhalb des Meniskus der ersten Flüssigkeit platziert und der Kolben führt einen Unterhub aus.

Danach wird das untere Ende der Pipettenspitze in die erste Flüssigkeit eingetaucht und ein bestimmtes Dosiervolumen aufgenommen.

Wenn das Dosiervolumen aufgenommen ist, wird die Pipettenspitze aus der ersten Flüssigkeit herausgezogen und oberhalb des Meniskus angehalten. Dann wird ein Rückzug ausgeführt, wodurch die Flüssigkeit tiefer in die Pipettenspitze eingesogen wird.

Danach wird die Pipettenspitze zum Zielgefäß verfahren. Sie wird mit dem unteren Ende oberhalb des Meniskus der zweiten Flüssigkeit angehalten und der Kolben wird so verlagert, dass der Rückzug rückgängig gemacht wird und das Kontaktierungsvolumen aus dem unteren Ende der Pipettenspitze herausgedrückt wird, um einen daran anhängenden Tropfen zu bilden.

Danach wird die Pipettenspitze in die zweite Flüssigkeit eingetaucht, beispielsweise 3 mm tief. Danach wird der Kolben so verlagert, dass das Restvolumen aus der Pipettenspitze herausgedrückt wird. Hierdurch wird das gesamte abzugebende Dosiervolumen bestehend aus Kontaktierungsvolumen und Restvolumen in die zweite Flüssigkeit abgegeben. Schließlich wird bei eingetauchter Pipettenspitze der Unterhub rückgängig gemacht. Der Unterhub ist so gewählt, dass sich hierbei eine halbkugelförmige Blase am unteren Ende der Pipettenspitze bildet, welche die gesamte erste Flüssigkeit aus der Pipettenspitze verdrängt, ohne sich von der Pipettenspitze zu lösen.

Danach wird die Pipettenspitze aus der Flüssigkeit herausgezogen und die Pipettierung ist abgeschlossen.

Zum Kontaktdispensieren mit und ohne Kontaktierungsvolumen wurden Vergleichsuntersuchungen am Hauptsitz der Anmelderin in Hamburg durchgeführt. Hierfür wurde ein Laborautomat epMotion 5075 der Eppendorf AG mit drei baugleichen Einkanaldosierwerkzeugen TS-10 verwendet. Es wurden Pipettenspitzen vom Typ Eppendorf 10 µl Reload/Standard, Art.-Nr. 0030014.545 mit einem Nennvolumen von 10 µl (Automatenspitzen) verwendet. Sowohl als erste als auch als zweite Dosierflüssigkeit wurde Wasser der Qualität 3 entsprechend DIN 8655, die sich wiederum auf DIN 3696 bezieht, verwendet. Die Untersuchungen wurden im klimatisierten Laborraum bei konstanter Temperatur und konstanter relativer Luftfeuchtigkeit durchgeführt. Für die gravimetrische Ermittlung des abgegebenen Dosiervolumens wurden Präzisionswaagen vom Typ WZS 26 HC und WZA 26 NC verwendet. Das Zielgefäß wurde auf die Präzisionswaage gesetzt. Die Pipettenspitze wurde durch eine Verdunstungsfalle hindurch in das Zielgefäß eingeführt.

Sowohl für das Kontaktdispensieren mit Kontaktierungsvolumen als auch für das Kontaktdispensieren ohne Kontaktierungsvolumen wurden mit jedem der drei Werkzeuge 10 Messreihen durchgeführt, wobei jede Messreihe neun Dosierungen umfasste, d.h. neun Dispensierschritte.

Bei den Vergleichsmessungen mit und ohne Kontaktierungsvolumen betrug das definierte abzugebende Volumen (Sollvolumen) 0,5 µl.

Bei den Ergebnissen der Messungen ohne Kontaktierungsvolumen wurden drei Grundmuster erkannt:
Im Regelfall wurde bei der ersten Dosierung einer Messreihe keine Flüssigkeit abgegeben (Nulldosierung), bei der zweiten Dosierung derselben Messreihe ein das Sollvolumen signifikant überschreitendes Dosiervolumen und bei den nachfolgenden Dosierungen derselben Messreihe das Sollvolumen geringfügig unterschreitende Dosiervolumen.

In einigen Ausnahmefällen wurden jeweils abwechselnd eine Minderabgabe (in der Regel eine Nulldosierung) und eine Mehrabgabe festgestellt, wobei das abgegebene Dosiervolumen etwa das Doppelte des Sollvolumens betrug.

Bei nur 2 Messreihen erfolgten korrekte Dosierungen, d.h. das abgegebene Dosiervolumen kam dem Sollvolumen recht nahe.

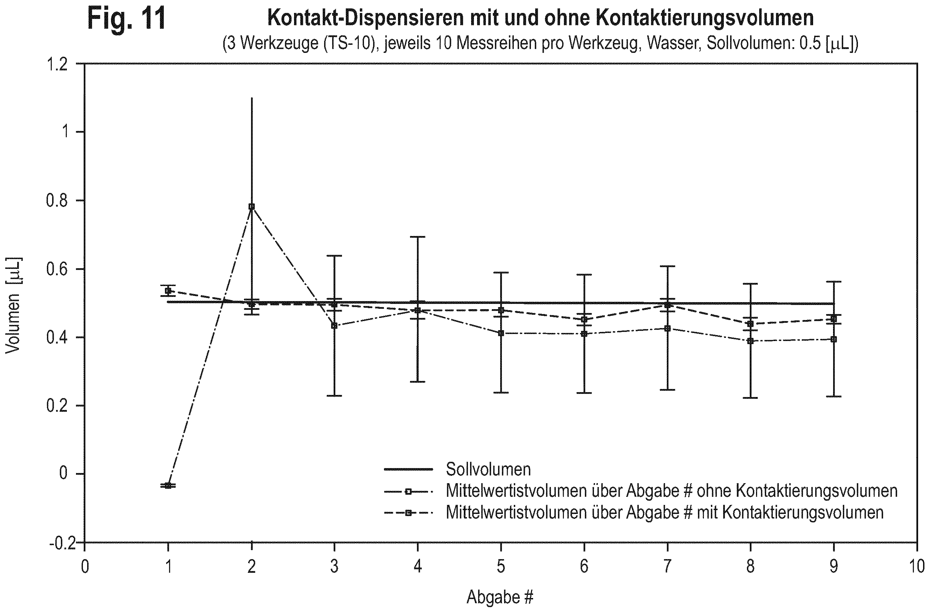

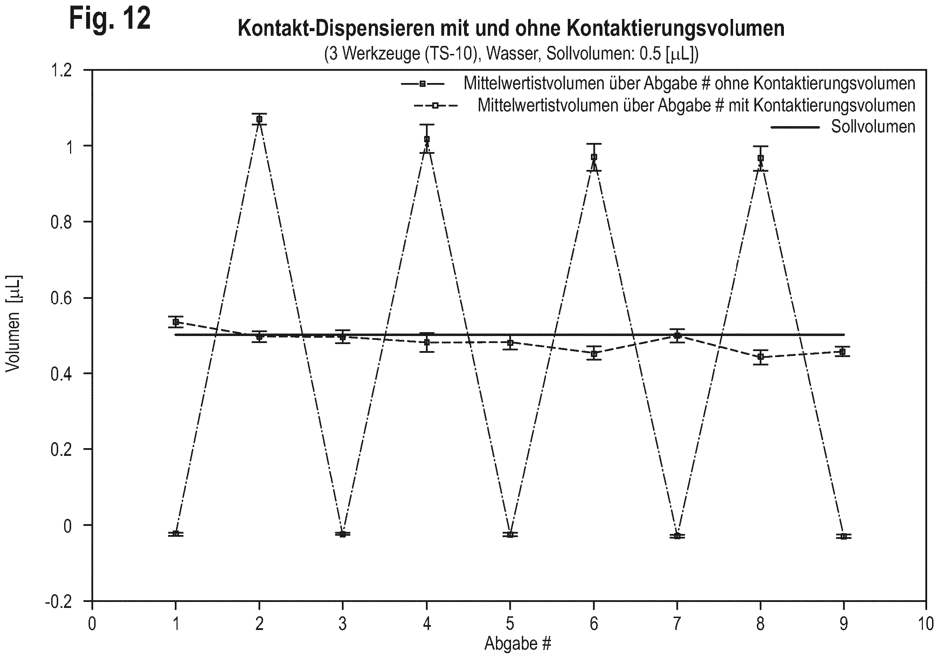

Die zum Regelfall gehörenden Messreihen sind in Fig. 11 und die zum Ausnahmefall gehörenden Messreihen sind in Fig. 12 dargestellt. In den Fig. 11 und 12 sind die Mittelwerte der Messergebnisse beim Kontaktdispensieren ohne Kontaktierungsvolumen durch strichpunktierte Linien miteinander verbunden. Ferner sind in den beiden Figuren die Mittelwerte der Messergebnisse beim Kontaktdispensieren mit Kontaktierungsvolumen durch gepunktete Linien miteinander verbunden. Zu sämtlichen Mittelwerten sind die Fehlerbalken angegeben. Das Sollvolumen von 0,5 µl ist jeweils mit einer ausgezogenen Linie markiert.

Gemäß Fig. 11 und 12 sind beim Kontaktdispensieren mit Kontaktierungsvolumen sämtliche abgegebenen Dosiervolumen präziser als beim Kontaktdispensieren ohne Kontaktierungsvolumen.

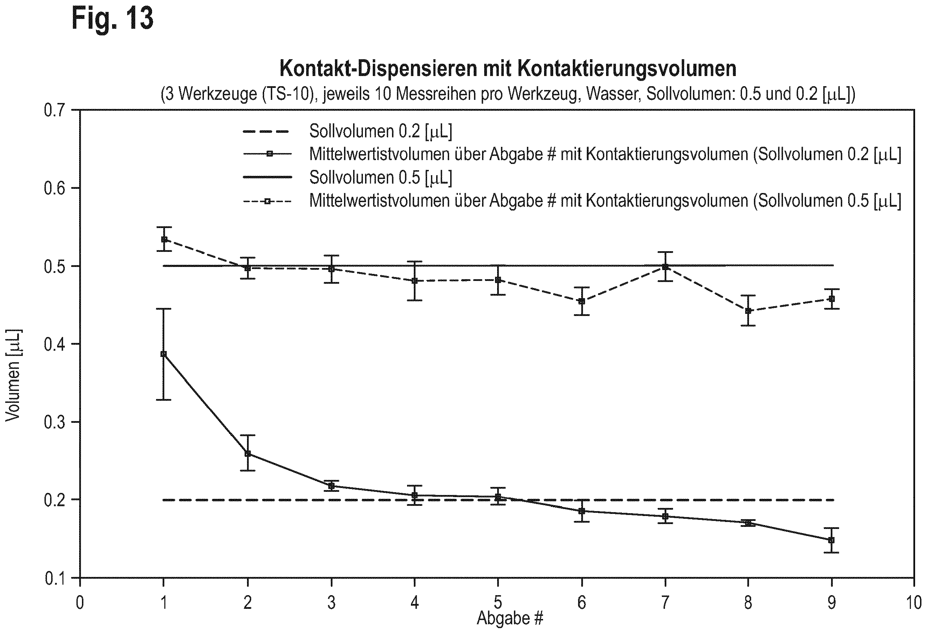

Ferner wurden beim Kontaktdispensieren mit Kontaktierungsvolumen mit den drei Werkzeugen jeweils 10 Messreihen jeweils mit einem Sollvolumen von 0,5 und 0,2 µl durchgeführt. Die Messergebnisse sind in Fig. 13 dargestellt.

Das Sollvolumen von 0,5 µl ist mit einer ausgezogenen Linie markiert. Das Sollvolumen von 0,2 µl mit einer gestrichelten Linie.

Die Mittelwerte der Messergebnisse der Messreihen bei einem Sollvolumen von 0,5 µl sind durch gepunktete Linien miteinander verbunden.

Die Mittelwerte der Messergebnisse bei der Messreihe mit 0,2 µl Sollvolumen sind durch eine ausgezogene Linie miteinander verbunden. Zu sämtlichen Mittelwerten sind die Fehlerbalken angegeben.

Demnach wurde das Sollvolumen von 0,5 µl mit einer guten Genauigkeit eingehalten.

Bei einem Sollvolumen von 0,2 µl wichen beim ersten Dosierschritt die Dosiervolumen stark und beim zweiten Dosierschritt immer noch deutlich vom Sollvolumen ab. Bei nachfolgenden Dosierschritten erfolgten hinreichend präzise Dosierungen. Dieser Befund kann beim Kontaktdispensieren dazu verwendet werden, die beiden ersten Dosierschritte zu verwerfen und die Dosiervolumen vom dritten Dosierschritt an zu verwenden.

Ferner hat ein Vergleich von Messergebnissen beim Kontaktpipettieren ohne Kontaktierungsvolumen mit Messungen beim Kontaktdispensieren jeweils mit einem Sollvolumen von 0,2 µl ergeben, dass die Messwerte der Dosierungen mit Kontaktierungsvolumen signifikant geringer streuen als die Messergebnisse der Dosierungen ohne Kontaktierungsvolumen. Somit ist auch beim Kontaktpipettieren mit Kontaktierungsvolumen eine Verbesserung der Präzision gegenüber dem Kontaktpipettieren ohne Kontaktierungsvolumen möglich.

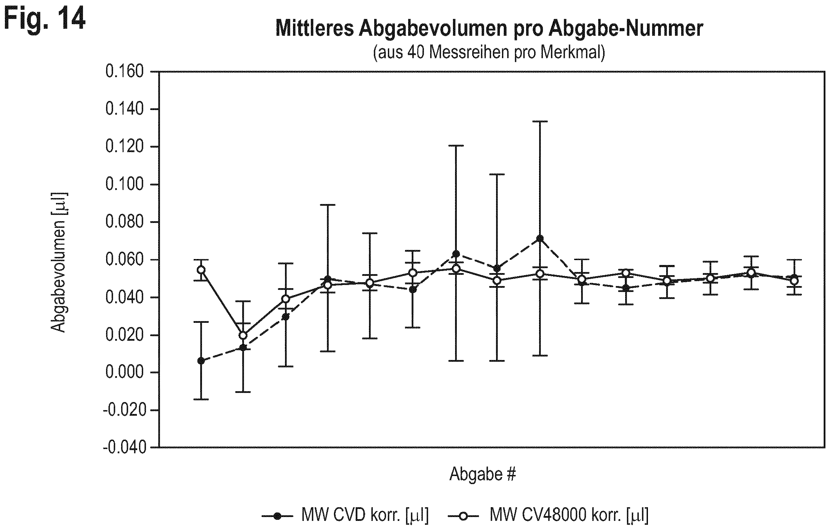

Bei den der Fig. 14 zugrundeliegenden Vergleichsuntersuchungen wurde anstatt der Einkanaldosierwerkzeuge TS-10 ein neu entwickeltes Werkzeug mit einer abweichenden Übersetzung verwendet, sodass der Vorschub des Kolbens mit höherer Auflösung kontrolliert werden kann. Im Übrigen wurden dieselben Gerätschaften und Untersuchungsbedingungen wie bei den zuvor beschriebenen Vergleichsuntersuchungen verwendet.

Bei dieser Vergleichsuntersuchung wurden sowohl für das Kontaktdispensieren mit Kontaktierungsvolumen als auch für das Kontaktdispensieren ohne Kontaktierungsvolumen 40 Messreihen durchgeführt. Bei beiden Messreihen betrug das abzugebende definierte Messvolumen 0,05 µl (50 nl).

Bei sämtlichen Messreihen dieser Vergleichsuntersuchung wurden zunächst die Pipettenspitzen konditioniert, indem mehrfach (5fach) aus einem Quellgefäß erste Flüssigkeit in die Pipettenspitze aufgenommen und in das Quellgefäß zurückgegeben wurde. Hierbei entspricht das Volumen erster Flüssigkeit, die jeweils in die Pipettenspitze aufgenommen und aus dieser abgegeben wurde, der Summe der abzugebenden Dosiervolumen zuzüglich eines Restabgabevolumens.

Danach wurden in die Pipettenspitze das 15-fache definierte Dosiervolumen und ein Restabgabevolumen aufgenommen.In 15 Dispensierschritten wurde jeweils das definierte Dosiervolumen in das jeweilige Zielgefäß abgegeben und schließlich ein Restabgabevolumen in das Quellgefäß.

Bei dieser Vergleichsuntersuchung wurde das Ausmaß der Verdunstung der Flüssigkeit aus dem Wägegefäß ermittelt und die Messergebnisse entsprechend korrigiert.

In Fig. 14 sind die Mittelwerte der Messergebnisse beim Kontaktdispensieren ohne Kontaktierungsvolumen bei den verschiedenen Dispensierschritten durch schwarze Punkte dargestellt, die durch graue Linien miteinander verbunden sind. Die Mittelwerte der Messergebnisse beim Kontaktdispensieren mit Kontaktierungsvolumen bei den verschiedenen Dispensierschritten sind durch hellgraue Punkte dargestellt, die durch graue Linien miteinander verbunden sind. Zu sämtlichen Mittelwerten sind die Fehlerbalken angegeben.

Die Mittelwerte beim Kontaktdispensieren ohne Kontaktierungsvolumen weichen zunächst stark von dem definierten Dosierungsvolumen ab und nähern sich diesem erst beginnend vom zehnten Dosierschritt an. Die Streuung dieser Messwerte ist zunächst sehr groß und erst vom zehnten Dosierschritt an deutlich verringert.

Die Mittelwerte beim Kontaktdispensieren mit Kontaktierungsvolumen sind von Anfang an vergleichsweise nahe beim definierten Dosierungsvolumen und streuen nur geringfügig. Vom fünften Dosierschritt an liegen diese Messergebnisse sehr nahe an dem definierten Dosiervolumen. Vor diesem Hintergrund werden nach einer Ausführungsart des erfindungsgemäßen Verfahrens die in den ersten vier Dispensierschritten abgegebenen Dosiervolumen als Vorabgabevolumen verworfen, vorzugsweise in das Quellgefäß. Die nachfolgenden Dispensierschritte werden als eigentliche Dosierungen gewertet.,
Diese Vergleichsuntersuchung hat gezeigt, dass mit dem erfindungsgemäßen Verfahren auch sehr kleine definierte Dosiervolumen präzise dosiert werden können.

### Bezugszeichenliste:

- 1: Pipettenspitze
- 2: Röhrchen
- 3: unteres Ende
- 4: untere Öffnung
- 5: oberes Ende
- 6: obere Öffnung
- 7: Ansatz
- 8: Dosiervorrichtung
- 9: Quellgefäß
- 10: Zielgefäß
- 11: Mikrotiterplatte
- 12: erste Flüssigkeit
- 13: zweite Flüssigkeit
- 14: Tropfen
- 15: Kontaktierungsvolumen
- 16: Restvolumen
- 17: Dosiervolumen
- 18: Blase

## Patentansprüche

1. Verfahren zum Kontaktdosieren von Flüssigkeiten umfassend die folgenden Schritte:
• in mindestens einen länglichen Hohlkörper wird eine erste Flüssigkeit eingefüllt,
• ein Teil der in dem länglichen Hohlkörper enthaltenen ersten Flüssigkeit wird als Kontaktierungsvolumen aus dem unteren Ende des länglichen Hohlkörpers herausgedrückt, sodass das Kontaktierungsvolumen einen am unteren Ende des länglichen Hohlkörpers anhängenden Tropfen bildet,
• der Tropfen und das untere Ende des länglichen Hohlkörpers wird in eine zweite Flüssigkeit in einem Zielgefäß eingetaucht, und
• das definierte Dosiervolumen bestehend aus dem Kontaktierungsvolumen und einem in dem länglichen Hohlkörper enthaltenen Restvolumen wird in die zweite Flüssigkeit abgegeben.

2. Verfahren nach Anspruch 1, bei dem die erste Flüssigkeit in den länglichen Hohlkörper eingefüllt wird, indem der mindestens eine längliche Hohlkörper mit seinem unteren Ende in eine erste Flüssigkeit in einem Quellgefäß eingetaucht wird und in den länglichen Hohlkörper erste Flüssigkeit eingesogen wird, wobei das Volumen der eingesogenen ersten Flüssigkeit mindestens ein definiertes Dosiervolumen umfasst, und der längliche Hohlkörper mit der darin enthaltenen ersten Flüssigkeit dem Quellgefäß entnommen wird.

3. Verfahren nach Anspruch 1 oder 2, bei dem in den länglichen Hohlkörper mehrfach erste Flüssigkeit eingefüllt und aus dem länglichen Hohlkörper abgegeben wird, in den länglichen Hohlkörper erste Flüssigkeit eingefüllt und zunächst mehrere Vorabgabevolumen, die jeweils dem definierten Dosiervolumen entsprechen, in der gleichen Weise wie bei der Abgabe des definierten Dosiervolumens abgegeben werden und schließlich mindestens einmal das definierte Dosiervolumen abgegeben wird.

4. Verfahren nach einem der Ansprüche 1 bis 3, bei dem in den länglichen Hohlkörper erste Flüssigkeit eingesogen wird, welche mindestens ein definiertes Dosiervolumen, ein Umkehrhubvolumen und ein Restabgabevolumen umfasst, wobei das Umkehrhubvolumen dazu dient, einen Umkehrhub auszuführen, um einen Einfluss eines Spiels in der Antriebsmechanik der Verdrängungseinrichtung einer Dosiervorrichtung auf das abgegebene Dosiervolumen zu eliminieren, und durch das Restabgabevolumen gesichert wird, dass eine hinreichende Menge erster Flüssigkeit für die Abgabe des definierten Dosiervolumens in den länglichen Hohlkörper eingesogen wird.

5. Verfahren nach einem der Ansprüche 2 bis 4, bei dem in den länglichen Hohlkörper vor dem Einsaugen erster Flüssigkeit und wenn sich sein unteres Ende noch nicht in der ersten Flüssigkeit befindet ein Unterhubvolumen an Luft eingesogen und nach dem Abgeben des Dosiervolumens in die zweite Flüssigkeit durch Ausblasen des Unterhubvolumens an Luft restliche erste Flüssigkeit aus dem länglichen Hohlkörper entfernt wird.

6. Verfahren nach einem der Ansprüche 1 bis 5, bei dem der längliche Hohlkörper nach der Aufnahme der ersten Flüssigkeit vom Quellgefäß weg zum Zielgefäß hin verlagert wird und der Tropfen am unteren Ende des länglichen Hohlkörpers gebildet wird, wenn sich der längliche Hohlkörper näher am Zielgefäß als am Quellgefäß befindet.

7. Verfahren nach einem der Ansprüche 2 bis 6, bei dem nach dem Herausziehen des länglichen Hohlkörpers aus dem Quellgefäß die erste Flüssigkeit in den länglichen Hohlkörper zurückgezogen wird und danach der Tropfen am unteren Ende des länglichen Hohlkörpers gebildet wird.

8. Verfahren nach einem der Ansprüche 1 bis 7, bei dem nach der Abgabe des definierten Dosiervolumens der länglichen Hohlkörper aus dem Zielgefäß herausgezogen wird, ein Tropfen mit dem Kontaktierungsvolumen am unteren Ende des länglichen Hohlkörpers gebildet wird, zumindest ein Teil des Tropfens in eine zweite Flüssigkeit in einem anderen Zielgefäß eingetaucht wird und das definierte Dosiervolumen bestehend aus dem Kontaktierungsvolumen und einem in den länglichen Hohlkörper vorhandenen Restvolumen in die zweite Flüssigkeit im anderen Zielgefäß abgegeben wird und ggf. die vorstehenden Schritte wiederholt werden.

9. Verfahren nach Anspruch 8, bei dem nach der Abgabe des definierten Dosiervolumens der längliche Hohlkörper aus dem Zielgefäß herausgezogen wird, danach der längliche Hohlkörper zu einem weiteren Zielgefäß hin verlagert wird und der Tropfen am unteren Ende des länglichen Hohlkörpers ausgebildet wird, wenn sich der längliche Hohlkörper näher am weiteren Zielgefäß als am Zielgefäß befindet.

10. Verfahren nach einem der Ansprüche 1 bis 9, bei dem der längliche Hohlkörper über das Zielgefäß verlagert wird und dann der Tropfen am unteren Ende des länglichen Hohlkörpers gebildet wird.

11. Verfahren nach einem der Ansprüche 1 bis 10, bei dem während der Ausbildung des Tropfens der längliche Hohlkörper ruht oder zur zweiten Flüssigkeit im Zielgefäß hin verlagert wird.

12. Verfahren nach einem der Ansprüche 1 bis 11, bei dem das Kontaktierungsvolumen im Bereich von 0,5 bis 0,001 µl, vorzugsweise 0,2 bis 0,05 µl, vorzugsweise 0,1 µl beträgt und/oder bei dem das definierte Dosiervolumen 0,05 bis 100 µl, vorzugsweise 0,1 bis 1 µl, vorzugsweise 0,2 bis 0,5 µl beträgt.

13. Verfahren nach einem der Ansprüche 1 bis 12, bei dem der Tropfen mit dem Kontaktierungsvolumen eine Kugel oder ein Kugelsegment ist, wobei das Kugelsegment kleiner als eine Halbkugel ist, so groß wie eine Halbkugel oder größer als eine Halbkugel ist.

14. Verfahren nach einem der Ansprüche 1 bis 13, bei dem die erste Flüssigkeit in den länglichen Hohlkörper durch Verlagern eines Luftpolsters mittels eines Kolbens in einen Zylinder oder mittels einer anderen Verdrängungsvorrichtung oder durch Verlagern eines direkt in Kontakt mit der ersten Flüssigkeit stehenden Kolbens in dem länglichen Hohlkörper verlagerbar ist.

15. Dosiervorrichtung zum Kontaktdosieren von Flüssigkeiten, umfassend eine Halteeinrichtung zum Halten mindestens eines länglichen Hohlkörpers, eine Verdrängungseinrichtung für Flüssigkeit, einen elektromotorischen Antrieb zum Antreiben der Verdrängungseinrichtung, eine elektrische Steuerungseinrichtung und eine elektrische Energieversorgung, wobei die elektrische Steuerungseinrichtung so programmiert ist, dass sie den elektromotorischen Antrieb so steuert, dass die Verdrängungseinrichtung gemäß dem Verfahren nach einem der Ansprüche 1 bis 14 erste Flüssigkeit in den länglichen Hohlkörper aufnehmen und aus diesem ausstoßen kann.

16. Dosiervorrichtung nach Anspruch 15, die eine elektrisch oder manuell angetriebene Handdosiervorrichtung, ein Dosierautomat oder ein Laborautomat ist, wobei die Dosiervorrichtung eine Einkanal- oder eine Mehrkanaldosiervorrichtung ist.

## Claims

1. A method for the contact metering of liquids comprising the following steps:
• a first liquid is introduced into at least one elongate hollow body,
• some of the first liquid contained in the elongate hollow body is pressed out of the lower end of the elongate hollow body as a contacting volume such that the contacting volume forms a drop suspended from the lower end of the elongate hollow body,
• the drop and the lower end of the elongate hollow body is immersed in a second liquid in a target vessel, and
• the defined metering volume consisting of the contacting volume and a residual volume contained in the elongate hollow body is dispensed into the second liquid.

2. The method according to claim 1, wherein the liquid is introduced into the elongate hollow body by means of the at least one elongate hollow body being immersed by the lower end thereof in a first liquid in a source vessel and the first liquid being aspirated into the elongate hollow body, the volume of the aspirated first liquid comprising at least one defined metering volume, and the elongate hollow body containing the first liquid is removed from the source vessel.

3. The method according to claim 1 or 2, wherein the first liquid is introduced into the elongate hollow body multiple times and is dispensed from the elongate hollow body, the first liquid is introduced into the elongate hollow body and firstly several predispensing volumes, which each correspond to the defined metering volume, are dispensed in the same way as the defined metering volume is dispensed and finally the defined metering volume is dispensed at least once.

4. The method according to any one of claims 1 to 3, wherein the first liquid is aspirated into the elongate hollow body, which first liquid comprises at least one defined metering volume, one reverse stroke volume and one residual dispensing volume, the reverse stroke volume being reserved for performing a reverse stroke in order to eliminate any influence of backlash in the drive mechanics of the displacement apparatus of a metering device on the dispensed metering volume, and on account of the residual dispensing volume it being ensured that a sufficient amount of the first liquid for dispensing the defined metering volume is aspirated into the elongate hollow body.

5. The method according to any one of claims 2 to 4, wherein, prior to aspiration of the first liquid and if the lower end of the elongate hollow body is not yet immersed in the first liquid, a lower stroke volume of air is aspirated into the elongate hollow body and, after the metering volume has been dispensed into the second liquid, the remnants of the first liquid are removed from the elongate hollow body by blowing out the lower stroke volume of air.

6. The method according to any one of claims 1 to 5, wherein the elongate hollow body is moved away from the source vessel and toward the target vessel after taking up the first liquid and the drop on the lower end of the elongate hollow body is formed when the elongate hollow body is closer to the target vessel than to the source vessel.

7. The method according to any one of claims 2 to 6, wherein, after the elongate hollow body has been removed from the source vessel, the first liquid is drawn back into the elongate hollow body and subsequently the drop is formed on the lower end of the elongate hollow body.

8. The method according to any one of claims 1 to 7, wherein, after the defined metering volume has been dispensed, the elongate hollow body is removed from the target vessel, a drop comprising the contacting volume is formed on the lower end of the elongate hollow body, at least some of the drop is immersed in a second liquid in another target vessel and the defined metering volume consisting of the contacting volume and a residual volume present in the elongate hollow body is dispensed into the second liquid in another target vessel and, if necessary, the previous steps are repeated.

9. The method according to claim 8, wherein, after the defined metering volume has been dispensed, the elongate hollow body is removed from the target vessel, subsequently the elongate hollow body is moved toward another target vessel and the drop on the lower end of the elongate hollow body is formed when the elongate hollow body is closer to the other target vessel than to the target vessel.

10. The method according to any one of claims 1 to 9, wherein the elongate hollow body is moved over the target vessel and then the drop is formed on the lower end of the elongate hollow body.

11. The method according to any one of claims 1 to 10, wherein, during formation of the drop, the elongate hollow body remains stationary or is moved toward the second liquid in the target vessel.

12. The method according to any one of claims 1 to 11, wherein the contacting volume is in the range of from 0.5 to 0.001 µl, preferably from 0.2 to 0.05 µl, preferably 0.1 µl and/or wherein the defined metering volume is 0.05 to 100 µl, preferably 0.1 to 1 µl, preferably 0.2 to 0.5 µl.

13. The method according to any one of claims 1 to 12, wherein the drop comprising the contacting volume is a sphere or spherical segment, the spherical segment being smaller than a hemisphere, as large as a hemisphere, or larger than a hemisphere.

14. The method according to any one of claims 1 to 13, wherein the first liquid can be moved into the elongate hollow body by moving an air pocket by means of a piston into a cylinder or by means of another displacement device, or by moving a piston inside the elongate hollow body that is in direct contact with the first liquid.

15. A metering device for the contact metering of liquids, comprising a holding apparatus for holding at least one elongate hollow body, a displacement apparatus for liquid, an electromotive drive for driving the displacement apparatus, an electric control apparatus and an electric power supply, the electric control apparatus being programmed to control the electromotive drive such that the displacement apparatus can take the first liquid up into and eject it out of the elongate hollow body according to the method according to any one of claims 1 to 14.

16. The metering device according to claim 15, which device is an electrically or manually driven manual metering device, an automatic metering device or an automatic laboratory device, wherein the metering device is a single-channel or multi-channel metering device.

## Revendications

1. Procédé pour le dosage par contact de liquides, comportant les étapes suivantes :
• un premier liquide est introduit dans au moins un corps creux oblong,
• une partie du premier liquide contenu dans le corps creux oblong est extraite à partir de l'extrémité inférieure du corps creux oblong en tant que volume de mise en contact, de sorte que le volume de mise en contact forme une goutte suspendue à l'extrémité inférieure du corps creux oblong,
• la goutte et l'extrémité inférieure du corps creux oblong sont plongés dans un deuxième liquide dans un récipient cible, et
• le volume de dosage défini, composé du volume de mise en contact et d'un volume résiduel contenu dans le corps creux oblong, est distribué dans le deuxième liquide.

2. Procédé selon la revendication 1, dans lequel le premier liquide est introduit dans le corps creux oblong en plongeant l'au moins un corps creux oblong avec son extrémité inférieure dans un premier liquide dans un récipient source et en aspirant du premier liquide dans le corps creux oblong, dans lequel le volume du premier liquide aspiré comporte au moins un volume de dosage défini, et le corps creux oblong avec le premier liquide contenu dans celui-ci est retiré du récipient source.

3. Procédé selon la revendication 1 ou 2, dans lequel du premier liquide est introduit plusieurs fois dans le corps creux oblong et distribué à partir du corps creux oblong, du premier liquide est introduit dans le corps creux oblong et plusieurs volumes de distribution préalable correspondant respectivement au volume de dosage défini sont tout d'abord distribués de la même façon que pour la distribution du volume de dosage défini, et le volume de dosage défini est finalement distribué au moins une fois.

4. Procédé selon l'une des revendications 1 à 3, dans lequel du premier liquide est introduit dans le corps creux oblong, lequel comporte au moins un volume de dosage défini, un volume de course de retour et un volume de distribution résiduel, dans lequel le volume de course de retour sert à effectuer une course de retour permettant d'éliminer une influence d'un jeu dans la mécanique d'entraînement du système de refoulement d'un dispositif de dosage sur le volume de dosage distribué, et le volume de distribution résiduel permet de garantir qu'une quantité suffisante de premier liquide est aspirée dans le corps creux oblong pour la distribution du volume de dosage défini.

5. Procédé selon l'une des revendications 2 à 4, dans lequel un volume d'air de sous-course est aspiré dans le corps creux oblong avant l'aspiration de premier liquide et lorsque l'extrémité inférieure de celui-ci ne se trouve pas encore dans le premier liquide, et le premier liquide résiduel est expulsé hors du corps creux oblong par évacuation d'air du volume de sous-course après la distribution du volume de dosage dans le deuxième liquide.

6. Procédé selon l'une des revendications 1 à 5, dans lequel le corps creux oblong est transféré du récipient source vers le récipient cible après la réception du premier liquide et la goutte est formée à l'extrémité inférieure du corps creux oblong lorsque le corps creux oblong se trouve plus près du récipient cible que du récipient source.

7. Procédé selon l'une des revendications 2 à 6, dans lequel, après le retrait du corps creux oblong hors du récipient source, le premier liquide est prélevé dans le corps creux oblong, puis la goutte est formée à l'extrémité inférieure du corps creux oblong.

8. Procédé selon l'une des revendications 1 à 7, dans lequel, après la distribution du volume de dosage défini, le corps creux oblong est retiré hors du récipient cible, une goutte est formée avec le volume de mise en contact à l'extrémité inférieure du corps creux oblong, au moins une partie de la goutte est plongée dans un deuxième liquide dans un autre récipient cible et le volume de dosage défini, composé du volume de mise en contact et d'un volume résiduel présent dans le corps creux oblong, est distribué dans le deuxième liquide dans l'autre récipient cible et les étapes précédentes sont éventuellement répétées.

9. Procédé selon la revendication 8, dans lequel, après la distribution du volume de dosage défini, le corps creux oblong est retiré hors du récipient cible, puis le corps creux oblong est transféré vers un autre récipient cible et la goutte est formée à l'extrémité inférieure du corps creux oblong lorsque le corps creux oblong se trouve plus près de l'autre récipient cible que du récipient cible.

10. Procédé selon l'une des revendications 1 à 9, dans lequel le corps creux oblong est déplacé au-dessus du récipient cible, puis la goutte est formée à l'extrémité inférieure du corps creux oblong.

11. Procédé selon l'une des revendications 1 à 10, dans lequel, pendant la formation de la goutte, le corps creux oblong est au repos ou transféré vers le deuxième liquide dans le récipient cible.

12. Procédé selon l'une des revendications 1 à 11, dans lequel le volume de mise en contact mesure entre 0,5 et 0,001 µl, de préférence entre 0,2 et 0,05 µl, de préférence 0,1 µl et/ou dans lequel le volume de dosage défini mesure entre 0,05 et 100 µl, de préférence entre 0,1 et 1 µl, de préférence entre 0,2 et 0,5 µl.

13. Procédé selon l'une des revendications 1 à 12, dans lequel la goutte avec le volume de mise en contact est une sphère ou un segment sphérique, dans lequel le segment sphérique est plus petit qu'une demi-sphère, aussi grand qu'une demi-sphère ou plus grand qu'une demi-sphère.

14. Procédé selon l'une des revendications 1 à 13, dans lequel le premier liquide peut être déplacé dans le corps creux oblong par déplacement d'un coussin d'air au moyen d'un piston dans un cylindre ou au moyen d'un autre système de refoulement ou par déplacement d'un piston se trouvant directement en contact avec le premier liquide dans le corps creux oblong.

15. Dispositif de dosage pour le dosage par contact de liquides, comportant un système de maintien destiné à maintenir au moins un corps creux oblong, un système de refoulement pour liquide, un entraînement à moteur électrique destiné à entraîner le système de refoulement, un système de commande électrique et une alimentation en énergie électrique, dans lequel le système de commande électrique est programmé de manière à commander l'entraînement à moteur électrique de telle façon que le système de refoulement peut accueillir du premier liquide dans le corps creux oblong et expulser celui-ci conformément au procédé selon l'une des revendications 1 à 14.

16. Dispositif de dosage selon la revendication 15, consistant en un dispositif de dosage à main entraîné électriquement ou manuellement, un doseur automatique ou un distributeur automatique de laboratoire, dans lequel le dispositif de dosage est un dispositif de dosage à un canal ou à plusieurs canaux.
